# EUROPÄISCHE PATENTSCHRIFT

(11) **EP 2 796 006 B1**
(45) Veröffentlichungstag und Bekanntmachung des Hinweises auf die Patenterteilung: **08.06.2016**
(21) Anmeldenummer: 12824792.1
(22) Anmeldetag: 21.12.2012
(51) Int. Cl.: H05B 33/08, H05B 41/285, H05B 41/36

(54) **BETRIEBSGERÄT MIT LEISTUNGSFAKTORKORREKTUR UND RIPPELBEGRENZUNG DURCH BETRIEBSÄNDERUNG**
OPERATING DEVICE WITH POWER FACTOR CORRECTION AND RIPPLE LIMITATION BY CHANGE IN OPERATION
APPAREIL DE FONCTIONNEMENT À CORRECTION DU FACTEUR DE PUISSANCE ET LIMITATION D'ONDULATION PAR CHANGEMENT DE FONCTIONNEMENT

(30) Priorität: 23.12.2011 AT 6802011
(43) Veröffentlichungstag der Anmeldung: 29.10.2014
(73) Patentinhaber: Tridonic GmbH & Co. KG, 6851 Dornbirn (AT)
(72) Erfinder: MOOSMANN, Florian, A-6850 Dornbirn (AT); TROPPACHER, Rainer, A-6850 Dornbirn (AT); LOCHMANN, Frank, 88147 Esseratsweiler (DE)
(74) Vertreter: Rupp, Christian
(86) Internationale Anmeldenummer: PCT/AT2012/000324
(87) Internationale Veröffentlichungsnummer: WO 2013/090957

(56) Entgegenhaltungen:
- EP-A1- 2 302 984
- EP-A1- 2 365 620
- WO-A1-94/16492
- WO-A1-2009/001279
- DE-A1- 19 518 096
- US-A1- 2011 266 964

## Beschreibung

Die Erfindung betrifft ein Betriebsgerät für ein Leuchtmittel gemäß dem Oberbegriff des Patentanspruchs 1 sowie ein Verfahren gemäß dem Oberbegriff des Patentanspruchs 11.

### Technisches Gebiet

Derartige Betriebsgerät werden in Beleuchtungssystemen verwendet, um eine Beleuchtung von Räumen, Wegen oder auch Fluchtwegen zu erreichen. Üblicherweise werden dabei die Leuchtmittel von Betriebsgeräten angesteuert und bei Bedarf aktiviert. Für eine derartige Beleuchtung werden Gasentladungslampen oder auch Leuchtdioden (LED) als Lichtquelle genutzt.

### Stand der Technik

Gemäß dem Stand der Technik werden bereits Betriebsgeräte für Leuchtmittel mit Leistungsfaktorkorrektur eingesetzt, jedoch benötigen diese immer noch einen relativ großen Filter am Eingang.

Die Patent Schrift EP-A1-2 302 984 offenbart ein Betriebsgerät bzw. ein Verfahren gemäß Anspruch 1 bzw. 11.

### Darstellung der Erfindung

Es ist die Aufgabe der Erfindung, ein Betriebsgerät für ein Leuchtmittel bereitzustellen, welches eine Leistungsfaktorkorrektur aufweist und nur sehr geringe Störungen aussendet.

Diese Aufgabe wird für eine gattungsgemäße Vorrichtung erfindungsgemäß durch die kennzeichnenden Merkmale des Patentanspruchs 1 sowie für ein Verfahren erfindungsgemäß durch die kennzeichnenden Merkmale des Patentanspruchs 11 gelöst. Besonders vorteilhafte Ausführungen der Erfindung sind in den Unteransprüchen beschrieben.

Die Erfindung betrifft ein Betriebsgerät für ein Leuchtmittel mit mindestens einer Treiberschaltung zum Betreiben mindestens eines Leuchtmittels, einen Energiespeicher, der die Treiberschaltung speist, eine Leistungsfaktorkorrekturschaltung, die vorzugsweise als Hochsetzsteller ausgebildet ist und den Energiespeicher speist, aufweisend eine Speicherdrossel, einen aktiv getakteten Schalter und eine Gleichrichtdiode, wobei die Spannung am Energiespeicher überwacht wird und der Betrieb des Betriebsgerätes geändert wird, wenn der Rippel der Spannung am Energiespeicher einen vorgegebenen Grenzwert überschreitet dadurch gekennzeichnet, daß der Betrieb der Leistungsfaktorkorrekturschaltung geändert wird, wenn der Rippel der Spannung am Energiespeicher einen vorgegebenen Grenzwert überschreitet.

Das Betriebsgerät verfügt vorzugsweise über Mittel zur Abschätzung der zu erwartenden Lebensdauer des Energiespeichers. Diese Mittel zur Abschätzung der zu erwartenden Lebensdauer werten vorzugsweise den erfassten Rippel der Spannung am Energiespeicher aus. Optional können zusätzlich auch weitere Messungen oder Ansteuergrößen innerhalb des Betriebsgerätes aufgewertet werden.

Die Erfindung betrifft auch ein Verfahren zum Betreiben von Leuchtmitteln, wobei das Leuchtmittel durch mindestens eine Treiberschaltung betrieben wird, eine Leistungsfaktorkorrekturschaltung den Energiespeicher speist und ein Energiespeicher die Treiberschaltung speist, wobei, die Spannung am Energiespeicher überwacht wird und der Betrieb des Leuchtmittels abhängig vom erfassten Rippel der Spannung am Energiespeicher erfolgt, dadurch gekennzeichnet, daß der Betrieb der Leistungsfaktorkorrekturschaltung geändert wird, wenn der Rippel der Spannung am Energiespeicher einen vorgegebenen Grenzwert überschreitet.

Der Betrieb des Leuchtmittels kann vorzugsweise dann geändert werden, wenn der erfasste Rippel der Spannung am Energiespeicher einen vorgegebenen Grenzwert überschreitet.

Beschreibung der bevorzugten Ausführungsbeispiele

Nachfolgend soll die Erfindung anhand der beigefügten Zeichnung näher erläutert werden. Es zeigen:
Fig. 1 zeigt ein erfindungsgemäßes Betriebsgerät
Fig. 2 zeigt die Leistungsfaktorkorrekturschaltung eines erfindungsgemäßen Betriebsgerätes

Nachfolgend wird die Erfindung anhand eines Ausführungsbeispiels eines Betriebsgerätes für ein Leuchtmittel erklärt.

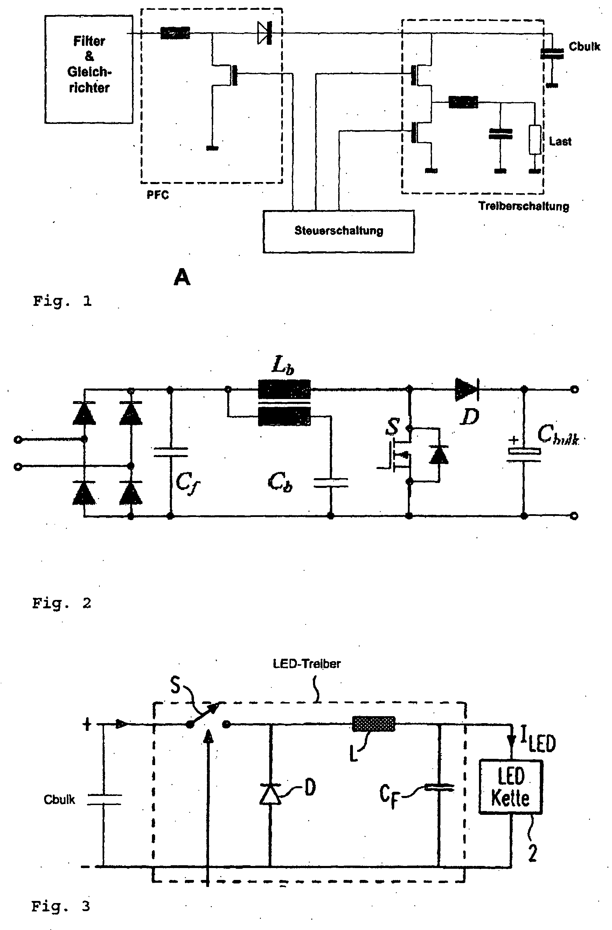

In der Fig. 1 ist ein Betriebsgerät A für ein Leuchtmittel dargestellt.

Ein solches Betriebsgerät A für ein Leuchtmittel weist typischer weise eine Treiberschaltung (Lampentreiber) zum Betreiben mindestens eines Leuchtmittels (Last) auf, einen Energiespeicher, der die Treiberschaltung speist, eine Leistungsfaktorkorrekturschaltung (PFC), die als Hochsetzsteller ausgebildet sein kann und den Energiespeicher speist, aufweisend eine Speicherdrossel, einen aktiv getakteten Schalter und eine Gleichrichtdiode. Der Leistungsfaktorkorrekturschaltung ist vorzugsweise eine Filterschaltung und eine Gleichrichterschaltung vorgeschaltet. Die Treiberschaltung ist in diesem Beispiel eine resonante Halbbrücke zum Ansteuern einer Lampenlast. Alternativ kann die Treiberschaltung auch durch eine resonante Halbbrücke mit Potentialtrennung und Gleichrichtung am Ausgang zum Ansteuern von LED gebildet werden.

In der Fig. 2 ist eine erfindungsgemäße Leistungsfaktorkorrekturschaltung für ein Betriebsgerät für ein Leuchtmittel dargestellt.

Die Leistungsfaktorkorrekturschaltung, ist als Hochsetzsteller ausgebildet und speist den Energiespeicher Cbulk. Der Energiespeicher Cbulk ist beispielsweise eine Elektrolytkondensator. Sie weist eine Speicherdrossel Lb, einen aktiv getakteten Schalter S und eine Gleichrichtdiode D auf.

Das Betriebsgerät (A) für ein Leuchtmittel weist mindestens eine Treiberschaltung zum Betreiben mindestens eines Leuchtmittels, einen Energiespeicher (Cbulk), der die Treiberschaltung (LED-Treiber) speist auf, sowie eine Leistungsfaktorkorrekturschaltung, die vorzugsweise als Hochsetzsteller ausgebildet ist und den Energiespeicher (Cbulk) speist, aufweisend eine Speicherdrossel (Lb), einen aktiv getakteten Schalter (S) und eine Gleichrichtdiode (D). Die Spannung am Energiespeicher (Cbulk) wird überwacht und der Betrieb des Betriebsgerätes (A) wird geändert, wenn der Rippel der Spannung am Energiespeicher (Cbulk) einen vorgegebenen Grenzwert überschreitet.

Das Betriebsgerät (A) für ein Leuchtmittel kann den Betrieb der Treiberschaltung (LED-Treiber) und / oder der Leistungsfaktorkorrekturschaltung ändern, wenn der Rippel der Spannung am Energiespeicher (Cbulk) einen vorgegebenen Grenzwert überschreitet. Die Spannung am Energiespeicher (Cbulk) kann abgesenkt werden, wenn der Rippel der Spannung am Energiespeicher (Cbulk) einen vorgegebenen Grenzwert überschreitet. Bei Überschreiten eines Grenzwerts für den Rippel der Spannung am Energiespeicher (Cbulk) kann die Regelschleife oder die Regelparameter der Leistungsfaktorkorrekturschaltung verändert werden. Bei Überschreiten eines Grenzwerts für den Rippel der Spannung am Energiespeicher (Cbulk) kann die von der Treiberschaltung (LED-Treiber) abgegebene Leistung verringert werden.

Es ist auch möglich, dass mehrere Treiberschaltungen (LED-Treiber) von dem Energiespeicher (Cbulk) direkt oder indirekt gespeist werden, und bei Überschreiten eines Grenzwerts für den Rippel der Spannung am Energiespeicher (Cbulk) wird zumindest ein Teil der Treiberschaltungen (LED-Treiber) abgeschaltet. Die Treiberschaltung (LED-Treiber) ist vorzugsweise eine hochfrequent getaktete Schaltung aufweisend zumindest einen aktiv getakteten Schalter und eine Induktivität (L), die durch die hochfrequente Taktung auf- und entladen wird. Durch hochfrequent getaktete Treiberschaltung kann die LED mit hohem Wirkungsgrad angesteuert werden. Die Treiberschaltung (LED-Treiber) ist beispielsweise ein Tiefsetzsteller ein isolierter Sperrwandler oder eine Inverterschaltung.

Ein Beispiel für eine Treiberschaltung (LED-Treiber), die als Tiefsetzsteller ausgebildet ist ist in Fig. 3 gezeigt. Die LED der LED-Strecke werden abhängig von der Taktung des Schalters S angesteuert. Bei diesem Beispiel könnte bei Überschreiten eines Grenzwerts für den Rippel der Spannung am Energiespeicher (Cbulk) die von der Treiberschaltung (LED-Treiber) abgegebene Leistung durch eine Taktung des Schalters S mit verringertem Tastverhältnis verringert werden.

Das Leuchtmittel kann eine LED oder eine Gasentladungslampe sein.

Das Betriebsgerät (A) kann bei Überschreiten eines Grenzwerts für den Rippel der Spannung am Energiespeicher (Cbulk) eine Fehlermeldung über eine Schnittstelle aussenden oder es kann eine optische Signalisierung über das Leuchtmittel erfolgen.

Somit wird auch ein Verfahren zum Betreiben von Leuchtmitteln ermöglicht, wobei das Leuchtmittel durch mindestens eine Treiberschaltung (LED-Treiber) betrieben wird. Eine Leistungsfaktorkorrekturschaltung speist den Energiespeicher (Cbulk) und ein Energiespeicher (Cbulk) speist die Treiberschaltung (LED-Treiber).
Die Spannung am Energiespeicher (Cbulk) wird überwacht und der Betrieb des Leuchtmittels abhängig vom erfassten Rippel der Spannung am Energiespeicher (Cbulk) einen vorgegebenen Grenzwert erfolgt. Eine Temperatürüberwachung kann an dem Energiespeicher (Cbulk), der Leistungsfaktorkorrekturschaltung oder der Treiberschaltung (LED-Treiber) erfolgen und infolge einer Überschreitung einer vorgegebenen Grenztemperatur kann ein Herabsetzen der an das Leuchtmittel übertragenen Leistung oder auch ein anderweitiger Wechsel des Betriebs des Leuchtmittels erfolgen und der Wert der vorzugebenden Grenztemperatur kann abhängig von dem erfassten Rippen der Spannung am Energiespeicher (Cbulk) eingestellt werden.

Somit kann eine Beleuchtungseinheit aufweisend ein Betriebsgerät A für ein Leuchtmittel mit der erfindungsgemäßen Leistungsfaktorkorrekturschaltung aufgebaut werden.

Durch die Auswertung des erfassten Rippels der Spannung am Energiespeicher (Cbulk) sowie weiterer aus Messungen oder einer Auswertung von Ansteuersignalen erfassten Größen wie beispielsweise der aufgenommenen (oder auch abgegebenen) Leistung oder auch der Einschaltzeit des aktiv getakteten Schalter (S) der Leistungsfaktorkorrekturschaltung kann die zu erwartende Lebensdauer des Energiespeichers (Cbulk) und somit auch des gesamten Betriebsgeräts (1) abgeschätzt werden.

Auf diese Weise kann auch eine vorhergegangene Abschätzung der zu erwartenden Lebensdauer korrigiert werden.

Das Betriebsgerät (A) verfügt somit über Mittel zur Abschätzung der zu erwartenden Lebensdauer des Energiespeichers (Cbulk). Diese Mittel werten vorzugsweise den erfassten Rippel der Spannung am Energiespeicher (Cbulk) aus, optional können zusätzlich auch weitere Messungen oder Ansteuergrößen ausgewertet werden. Das Betriebsgerät ist zur Abschätzung der zu erwartenden Lebensdauer des Energiespeichers (Cbulk) anhand des erfassten Rippel der Spannung am Energiespeicher (Cbulk) ausgelegt.

Anhand der Überwachung der Einschaltzeit des aktiv getakteten Schalters (S) der Leistungsfaktorkorrekturschaltung kann bei einer Überwachung dieser Größe über eine oder mehrere Netzhalbwellen auf den Verlauf der übertragenen Leistung und auch indirekt auf den Rippel der Spannung am Energiespeicher (Cbulk) und / oder die Eingangsspannung geschlossen werden.

Das Betriebsgerät (A) kann auch weitere hintereinander geschaltete Leistungsstufen aufweisen. Dabei kann zwischen diesen Leistungsstufen jeweils ein Energiespeicher angeordnet sein, dessen Spannungs-Rippel zur Erkennung einer Alterung überwacht werden kann.

Der Rippel der Spannung am Energiespeicher (Cbulk) kann beispielsweise über einen Analog-Digital-Wandler ausgelesen werden. Dieser Analog-Digital-Wandler kann Teil einer integrierten Steuerschaltung sein, welche auch den Betrieb des Betriebsgerätes beeinflussen kann. So kann diese integrierte Steuerschaltung beispielsweise den aktiv getakteten Schalter (S) der Leistungsfaktorkorrekturschaltung oder auch den oder die Schalter des Treiberschaltung (LED-Treiber) ansteuern.

Sofern das Betriebsgerät (A) über eine Schnittstelle verfügt, kann auch ein Auslesen der zu erwartenden Lebensdauer über diese Schnittstelle möglich sein. Das Auslesen kann beispielsweise automatisch bei Überschreiten eines vorgegebenen Wertes für die zu erwartende Lebensdauer oder es kann auch auf eine externe Anfrage über die Schnittstelle hin der aktuelle Wert für die Lebensdauer ausgegeben werden. Bei Überschreiten eines Grenzwerts für den Rippel der Spannung am Energiespeicher (Cbulk) kann das Betriebsgerät (A) eine Fehlermeldung über eine Schnittstelle aussenden, da wie beschrieben die Überschreitung eines Grenzwerts für den Rippel der Spannung am Energiespeicher (Cbulk) ein Überschreiten einer bestimmten Lebensdauer des Energiespeichers (Cbulk) anzeigt.

## Patentansprüche

1. Betriebsgerät (A) für ein Leuchtmittel mit
- mindestens einer Treiberschaltung zum Betreiben mindestens eines Leuchtmittels,
- einen Energiespeicher (Cbulk), der die Treiberschaltung (LED-Treiber) speist,
- eine Leistungsfaktorkorrekturschaltung, die vorzugsweise als Hochsetzsteller ausgebildet ist und den Energiespeicher (Cbulk) speist, aufweisend eine
Speicherdrossel (Lb), einen aktiv getakteten
Schalter (S) und eine Gleichrichtdiode (D),
wobei die Spannung am
Energiespeicher (Cbulk) überwacht wird und der Betrieb des Betriebsgerätes (A) geändert wird, wenn der Rippel der Spannung am Energiespeicher (Cbulk) einen vorgegebenen Grenzwert überschreitet
**dadurch gekennzeichnet, daß**
der Betrieb der Leistungsfaktorkorrekturschaltung geändert wird, wenn der Rippel der Spannung am Energiespeicher (Cbulk) einen vorgegebenen Grenzwert überschreitet.

2. Betriebsgerät (A) für ein Leuchtmittel nach Anspruch 1,
**dadurch gekennzeichnet,**
**daß** der Betrieb der Treiberschaltung (LED-Treiber) und der Leistungsfaktorkorrekturschaltung geändert wird, wenn der Rippel der Spannung am Energiespeicher (Cbulk) einen vorgegebenen Grenzwert überschreitet.

3. Betriebsgerät (A) für ein Leuchtmittel nach Anspruch 2,
**dadurch gekennzeichnet, daß** die Spannung am
Energiespeicher (Cbulk) abgesenkt wird, wenn der Rippel der Spannung am Energiespeicher (Cbulk) einen vorgegebenen Grenzwert überschreitet.

4. Betriebsgerät (A) für ein Leuchtmittel nach Anspruch 2 oder 3,
**dadurch gekennzeichnet,**
**daß** bei Überschreiten eines Grenzwerts für den Rippel der Spannung am Energiespeicher (Cbulk) die Regelschleife oder die Regelparameter der
LeistungsfaktorkorrekturSchaltung Leistungsfaktorkorrekturschaltung verändert wird.

5. Betriebsgerät (A) für ein Leuchtmittel nach der Anspruch 2,
**dadurch gekennzeichnet,**
**daß** bei Überschreiten eines Grenzwerts für den Rippel der Spannung am Energiespeicher (Cbulk) die von der Treiberschaltung (LED-Treiber) abgegebene Leistung verringert wird.

6. Betriebsgerät (A) für ein Leuchtmittel nach Anspruch 1 wobei mehrere Treiberschaltungen (LED-Treiber) von dem Energiespeicher (Cbulk) direkt oder indirekt gespeist werden,
**dadurch gekennzeichnet,**
**daß** bei Überschreiten eines Grenzwerts für den Rippel der Spannung am Energiespeicher (Cbulk) die zumindest ein Teil der Treiberschaltungen (LED- Treiber) abgeschaltet wird.

7. Betriebsgerät (A) für ein Leuchtmittel nach einem der Ansprüche 1 bis 6,
**dadurch gekennzeichnet, daß** das Leuchtmittel eine LED ist.

8. Betriebsgerät (A) für ein Leuchtmittel nach einem der Ansprüche 1 bis 6,
**dadurch gekennzeichnet,**
**daß** das Leuchtmittel eine Gasentladungslampe ist.

9. Betriebsgerät (A) für ein Leuchtmittel nach einem der Ansprüche 1 bis 6,
**dadurch gekennzeichnet,**
**daß** das Betriebsgerät (A) bei überschreiten eines Grenzwerts für den Rippel der Spannung am
Energiespeicher (Cbulk) eine Fehlermeldung über eine Schnittstelle aussendet oder optisch signalisiert.

10. Beleuchtungseinheit aufweisend ein Betriebsgerät (A) für ein Leuchtmittel nach einem der Ansprüche 1 bis 9.

11. Verfahren zum Betreiben von Leuchtmitteln, wobei das Leuchtmittel durch mindestens eine Treiberschaltung (LED-Treiber) betrieben wird,
eine Leistungsfaktorkorrekturschaltung den
Energiespeicher (Cbulk) speist und ein
Energiespeicher (Cbulk) die Treiberschaltung (LED- Treiber) speist, wobei die Spannung am Energiespeicher (Cbulk) überwacht wird und der Betrieb des Leuchtmittels abhängig vom erfassten Rippel der Spannung am
Energiespeicher (Cbulk) erfolgt
**dadurch gekennzeichnet,**
**daß** der Betrieb der Leistungsfaktorkorrekturschaltung geändert wird, wenn der Rippel der Spannung am Energiespeicher (Cbulk) einen vorgegebenen Grenzwert überschreitet.

12. Verfahren nach Anspruch 11, wobei der Betrieb des des Leuchtmittels durch die Treiberschaltung (LED- Treiber) geändert wird, wenn der erfasste Rippel der Spannung am Energiespeicher (Cbulk) einen
vorgegebenen Grenzwert überschreitet.

13. Verfahren nach Anspruch 11 oder 12,
wobei eine Temperaturüberwachung an dem
Energiespeicher (Cbulk), der
Leistungsfaktorkorrekturschaltung oder der
Treiberschaltung (LED-Treiber) erfolgt und infolge eine Überschreitung einer vorgegebenen
Grenztemperatur ein Herabsetzen der an das
Leuchtmittel übertragenen Leistung erfolgt,
**dadurch gekennzeichnet, dass** der Wert der
vorzugebenden Grenztemperatur abhängig von dem erfassten Rippel der Spannung am Energiespeicher (Cbulk) eingestellt wird.

## Claims

1. An operating device (A) for a luminous means with
- at least one driver circuit for operating at least one luminous means,
- an energy store (Cbulk), which supplies the driver circuit (LED-driver),
- a power factor correction circuit, which is preferably designed as a boost converter and supplies the energy store (Cbulk), having a
storage inductor (Lb), an actively clocked switch (S) and a rectifier diode (D), wherein the voltage on the
energy store (Cbulk) is monitored and the operation of the operating device (A) is changed, if the ripple of the voltage on the energy store (Cbulk) exceeds a predetermined threshold value **characterized in that**
the operation of the power factor correction circuit is changed, if the ripple of the voltage on the energy store (Cbulk) exceeds a predetermined threshold value.

2. An operating device (A) for a luminous means according to Claim 1, **characterized in that** the operation of the driver circuit (LED-driver) and of the power factor correction circuit is changed, if the ripple of the voltage on the energy store (Cbulk) exceeds a predetermined threshold value.

3. An operating device (A) for a luminous means according to Claim 2, **characterized in that** the voltage on the energy store (Cbulk) is lowered, if the ripple of the voltage on the energy store (Cbulk) exceeds a predetermined threshold value.

4. An operating device (A) for a luminous means according to Claim 2 or 3, **characterized in that**
when a threshold value for the ripple of the voltage on the energy store (Cbulk) is exceeded the control loop or the control parameter of the power factor correction circuit is changed.

5. An operating device (A) for a luminous means according to Claim 2, **characterized in that** when a threshold value for the ripple of the voltage on the energy store (Cbulk) is exceeded the power outputted by the driver circuit (LED-driver) is reduced.

6. An operating device (A) for a luminous means according to Caim 1, wherein several driver circuits (LED-driver) are supplied directly or indirectly by the energy store (Cbulk), **characterized in that** when a threshold value for the ripple of the voltage on the energy store (Cbulk) is exceeded the at least one part of the driver circuits (LED-driver) is switched off.

7. An operating device (A) for a luminous means according to any one of Claims 1 to 6, **characterized in that** the luminous means is an LED.

8. An operating device (A) for a luminous means according to any one of Claims 1 to 6, **characterized in that** the luminous means is a gas discharge lamp.

9. An operating device (A) for a luminous means according to any one of Claims 1 to 6, **characterized in that** when a threshold value for the ripple of the voltage on the energy store (Cbulk) is exceeded the operating device (A) sends out or
optically signals an error message via an interface.

10. A lighting unit having an operating device (A) for a luminous means according to any one of Claims 1 to 9.

11. A method for the operation of luminous means, wherein the luminous means is operated by at least one driver circuit (LED-driver),
a power factor correction circuit supplies the energy store (Cbulk) and an energy store (Cbulk) supplies the driver circuit (LED-driver), wherein the voltage on the energy store (Cbulk) is monitored and the operation of the luminous means occurs depending on the detected ripple of the voltage on the energy store (Cbulk) **characterized in that** the operation of the power factor correction circuit is changed, if the ripple of the voltage on the energy store (Cbulk) exceeds a predetermined threshold value.

12. A method according to Claim 11, wherein the operation of the luminous means is changed by the driver circuit (LED-driver), if the detected ripple of the voltage on the energy store (Cbulk) exceeds a predetermined threshold value.

13. A method according to Claim 11 or 12, wherein a temperature monitoring on the energy store (Cbulk), the power factor correction circuit or the driver circuit (LED-driver) is carried out and as a result an exceedance of a predetermined limit temperature effects a reduction of the power transmitted to the luminous means, **characterized in that** the value of the limit temperature to be given is set depending on the detected ripple of the voltage on the energy store (Cbulk).

## Revendications

1. Dispositif d'exploitation (A) pour moyens d'éclairage avec
- au moins un circuit pilote pour l'exploitation d'au moins un moyen d'éclairage,
- un accumulateur d'énergie (Cbulk) qui alimente le circuit pilote,
- un circuit de correction de facteur de puissance qui est conçu de préférence sous la forme d'un convertisseur élévateur et qui alimente l'accumulateur d'énergie (Cbulk), comprenant une bobine d'accumulateur (Lb), un interrupteur (S) cadencé de manière active et une diode de redressement (D),
la tension au niveau de l'accumulateur d'énergie (Cbulk) étant surveillée et le fonctionnement du dispositif d'exploitation (A) étant modifié lorsque l'ondulation de la tension au niveau de l'accumulateur d'énergie (Cbulk) dépasse une valeur limite prédéterminée,
**caractérisé en ce que**
le fonctionnement du circuit de correction de facteur de puissance est modifié lorsque l'ondulation de la tension au niveau de l'accumulateur d'énergie (Cbulk) dépasse une valeur limite prédéterminée.

2. Dispositif d'exploitation (A) pour un moyen d'éclairage selon la revendication 1,
**caractérisé en ce que**
le fonctionnement du circuit pilote (pilote de LED) et le circuit de correction de facteur de puissance est modifié lorsque l'ondulation de la tension au niveau de l'accumulateur d'énergie (Cbulk) dépasse une valeur limite prédéterminée.

3. Dispositif d'exploitation (A) pour un moyen d'éclairage selon la revendication 2,
**caractérisé en ce que**
la tension au niveau de l'accumulateur d'énergie (Cbulk) est réduite lorsque l'ondulation de la tension au niveau de l'accumulateur d'énergie (Cbulk) dépasse une valeur limite prédéterminée.

4. Dispositif d'exploitation (A) pour un moyen d'éclairage selon la revendication 2 ou 3,
**caractérisé en ce que**
lors du dépassement d'une valeur limite pour l'ondulation de la tension au niveau de l'accumulateur d'énergie (Cbulk), la boucle de régulation ou les paramètres de régulation du circuit de correction du facteur de puissance est/sont modifiée/modifiés.

5. Dispositif d'exploitation (A) pour un moyen d'éclairage selon la revendication 2,
**caractérisé en ce que**
lors du dépassement d'une valeur limite pour l'ondulation de la tension au niveau de l'accumulateur d'énergie (Cbulk), la puissance générée par le circuit pilote (pilote de LED) est réduite.

6. Dispositif d'exploitation (A) pour un moyen d'éclairage selon la revendication 1, plusieurs circuits pilotes (pilotes de LED) étant alimentés directement ou indirectement par l'accumulateur d'énergie (Cbulk),
**caractérisé en ce que**,
lors du dépassement d'une valeur limite pour l'ondulation de la tension au niveau de l'accumulateur d'énergie (Cbulk), l'au moins une partie des circuits pilotes (pilotes de LED) sont désactivés.

7. Dispositif d'exploitation (A) pour un moyen d'éclairage selon l'une des revendications 1 à 6,
**caractérisé en ce que** le moyen d'éclairage est une LED.

8. Dispositif d'exploitation (A) pour un moyen d'éclairage selon l'une des revendications 1 à 6,
**caractérisé en ce que** le moyen d'éclairage est une lampe à décharge de gaz.

9. Dispositif d'exploitation (A) pour un moyen d'éclairage selon l'une des revendications 1 à 6,
**caractérisé en ce que**
le dispositif d'exploitation (A) envoie, lors du dépassement d'une valeur limite pour l'ondulation de la tension au niveau de l'accumulateur d'énergie (Cbulk), un message d'erreur par l'intermédiaire d'une interface ou le signale de manière optique.

10. Unité d'éclairage comprenant un dispositif d'exploitation (A) pour un moyen d'éclairage selon l'une des revendications 1 à 9.

11. Procédé pour l'exploitation de moyens d'éclairage, le moyen d'éclairage étant exploité à l'aide d'au moins un circuit pilote (pilote de LED),
un circuit de correction de facteur de puissance alimentant l'accumulateur d'énergie (Cbulk) et un accumulateur d'énergie (Cbulk) alimentant le circuit pilote (pilote de LED),
la tension au niveau de l'accumulateur d'énergie (Cbulk) étant surveillée et le fonctionnement du moyen d'éclairage ayant lieu en fonction de l'ondulation mesurée de la tension au niveau de l'accumulateur d'énergie (Cbulk),
**caractérisé en ce que**
le fonctionnement du circuit de correction de facteur de puissance est modifié lorsque l'ondulation de la tension au niveau de l'accumulateur d'énergie (Cbulk) dépasse une valeur limite prédéterminée.

12. Procédé selon la revendication 11, le fonctionnement du moyen d'éclairage étant modifié par le circuit pilote (pilote de LED) lorsque l'ondulation mesurée de la tension au niveau de l'accumulateur d'énergie (Cbulk) dépasse une valeur limite prédéterminée.

13. Procédé selon la revendication 11 ou 12, une surveillance de température a lieu au niveau de l'accumulateur d'énergie (Cbulk), du circuit de correction de facteur de puissance ou du circuit pilote (pilote de LED) et, suite à un dépassement d'une température limite prédéterminée, une diminution de la puissance transmise au moyen d'éclairage a lieu
**caractérisé en ce que**
la valeur de la température limite à prédéterminer est réglée en fonction de l'ondulation mesurée de la tension au niveau de l'accumulateur d'énergie (Cbulk).
